# EUROPÄISCHE PATENTANMELDUNG

(11) **EP 0 816 819 A2**
(43) Veröffentlichungstag der Anmeldung: **07.01.1998**
(21) Anmeldenummer: 97810433.9
(22) Anmeldetag: 02.07.1997
(51) Int. Cl.: G01M 1/12, G01M 1/36

(54) **Verfarhren und Einrichtung zum Messen einer Unwucht an einem Prüfling**

(30) Priorität: 05.07.1996 CH 1703/96
(71) Anmelder: Heinz Kaiser AG, 8153 Rümlang (CH)
(72) Erfinder: Keller, Daniel, 8425 Oberembrach (CH)
(74) Vertreter: Groner, Manfred

(57) **Zusammenfassung**

Die Einrichtung (1) weist einen Stator (3) auf, in dem ein Rotor (8) um eine im wesentlichen horizontale Achse (A) freilaufend gelagert ist. Dieser Rotor (8) besitzt eine Vorrichtung (10) zum lösbaren Befestigen des Prüflings (9) am Rotor (8). Nach einem Feststellen der Lage der Unwucht wird deren Schwerpunkt (S) durch Drehen des Rotors (8) angehoben und anschliessend die Grösse der Unwucht am Rotor (8) gemessen. Die Erfindung ermöglicht ein schnelleres und zugleich genaueres Auswuchten beispielsweise von Bearbeitungswerkzeugen für Werkzeugmaschinen, Maschinenelementen und rotativen Körpern.

## Beschreibung

Die Erfindung betrifft ein Verfahren zum Messen einer Unwucht an einem Prüfling, mit einer Einrichtung, die einen Stator aufweist, in dem ein Rotor um eine im wesentlichen horizontale Achse freilaufend gelagert ist und dieser Rotor eine Vorrichtung zum lösbaren Befestigen des Prüflings am Rotor aufweist, wobei die Lage der Unwucht feststellbar ist. Die Erfindung betrifft auch eine Einrichtung zum Messen der Grösse einer solchen Unwucht sowie ein Verfahren zum Auswuchten eines Prüflings mit einer solchen Einrichtung.

Verfahren und Einrichtung sind bekannt und werden seit langem dazu verwendet, beispielsweise rotativ eingesetzte Bearbeitungswerkzeuge, beispielsweise Ausdrehköpfe auszuwuchten. Solche Werkzeuge weisen bedingt durch ihre Konstruktion und Fertigungstoleranzen immer eine bestimmte Unwucht auf. Diese erzeugt bei der Rotation des Werkzeuges eine unerwünschte Fliehkraft. Ist nun diese Unwucht für den vorgesehenen Einsatz des Werkzeuges zu gross, muss sie mittels geeigneter Massnahmen kompensiert werden, da die von der Unwucht erzeugte Fliehkraft auf die Werkzeugmaschine wirkt, Schwingungen hervorruft und zu verminderter Qualität der zu bearbeitenden Werkstücke und/oder zur Einschränkung der Lebensdauer von einzelnen Komponenten der Werkzeugmaschine, beispielsweise des Spindellagers führt.

Bei einer bekannten Einrichtung der genannten Art ist der Rotor möglichst reibungsfrei horizontal gelagert. Der auszuwuchtende Prüfling wird am Rotor eingespannt. Die Unwucht des Prüflings erzeugt ein Drehmoment am Rotor und dreht diesen so, dass der Schwerpunkt der Unwuchtmasse in vertikaler Richtung nach unten zeigt. Durch Anbringen von Ausgleichsgewichten oder durch Materialabtrag am Prüfling wird dieser ausgewuchtet. Der Prüfling ist statisch ausgewuchtet, wenn der Rotor mit dem eingespannten Prüfling in jeder Drehlage stehen bleibt.

Bekannt sind auch Messmaschinen zum Bestimmen von Betrag und Lage der Unwucht. Ein Rotor ist dabei horizontal oder vertikal in einem Gehäuse gelagert. Der auszumessende Prüfling wird am Rotor eingespannt. Der Rotor wird von einem Antrieb in Drehung versetzt. Die Unwucht des Prüflings erzeugt Schwingungen, hervorgerufen durch die Unwucht. Die Schwingungen werden mittels Messeinrichtungen gemessen, von einer Elektronik umgerechnet und Lage und Betrag der Unwucht ermittelt. Diese Art von Messmaschinen sind, bedingt durch die Baugrösse, an einen Standort gebunden und benötigen elektrische Energiezuführung.

Der Erfindung liegt die Aufgabe zugrunde, ein Verfahren und eine Einrichtung der genannten Art zu schaffen, die es ermöglichen, das Auswuchten beliebiger Prüflinge zu vereinfachen.

Das erfindungsgemässe Verfahren ist dadurch gekennzeichnet, dass nach dem Feststellen der Lage der Unwucht deren Schwerpunkt durch Drehen des Rotors angehoben und anschliessend die Grösse der Unwucht am Rotor gemessen wird. Beim erfindungsgemässen Verfahren wird nach dem Feststellen der Lage der Unwucht am Prüfling der Schwerpunkt durch Drehen des Rotors angehoben und die Unwucht am Rotor, resp. das entstandene Drehmoment, gemessen. Beim erfindungsgemässen Verfahren muss die Unwucht somit nicht empirisch ermittelt werden, sondern wird durch Aufheben der Unwucht oder durch Messen bestimmt. Die gemessene Unwucht kann dann mit geeigneten Mitteln je nach Bedarf am Prüfling kompensiert werden. Bei bekannten Ausdrehwerkzeugen kann dies beispielsweise durch Einstellen von UnwuchtAusgleichsringen erfolgen. Dies ermöglicht ein schnelleres und zugleich genaueres Auswuchten solcher Werkzeuge als bisher.

Die erfindungsgemässe Einrichtung ist gekennzeichnet durch Mittel, mit denen eine Unwucht eines an einem Rotor befestigten Prüflings messbar ist, nachdem der Schwerpunkt der Unwucht nach einem Auspendeln des Rotors und des daran befestigten Prüflings durch Drehen des Rotors angehoben wurde. Der Einrichtung liegt ebenfalls das Prinzip zugrunde, dass nach dem Feststellen der Lage der Unwucht der Schwerpunkt angehoben und anschliessend die Grösse der Unwucht gemessen wird. Nach einer Weiterbildung der erfindungsgemässen Einrichtung weisen die genannten Mittel eine Schwerkraftwaage auf, die am Rotor fixierbar ist und mit der eine Unwucht des Prüflings aufhebbar ist. Das Aufheben der Unwucht erfolgt hier vorzugsweise durch Verschieben eines Gewichtes. Der Verschiebeweg kann dann unmittelbar als Mass für die Grösse der Unwucht verwendet werden. Wesentlich ist nun, dass eine solche Einrichtung einen sehr einfachen Aufbau aufweist und als kompaktes sowie tragbares Gerät herstellbar ist, das beispielsweise auf Werkbänken, Tischen und Werkzeugwagen im wesentlichen frei plazierbar ist. Es ist lediglich darauf zu achten, dass das Gerät im Betrieb im wesentlichen waagrecht aufgestellt ist. Die Erfindung eignet sich insbesondere zum Messen der Unwucht von Bearbeitungswerkzeugen für Werkzeugemaschinen, Maschinenelementen und rotativen Körpern.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung erläutert. Es zeigen:
Figur 1 einen Längsschnitt durch eine erfindungsgemässe Einrichtung,
Figur 2 eine Ansicht der Einrichtung gemäss Figur 1 und
Figur 3 eine Ansicht gemäss Figur 2, jedoch mit einer anderen Drehstellung des Rotors.

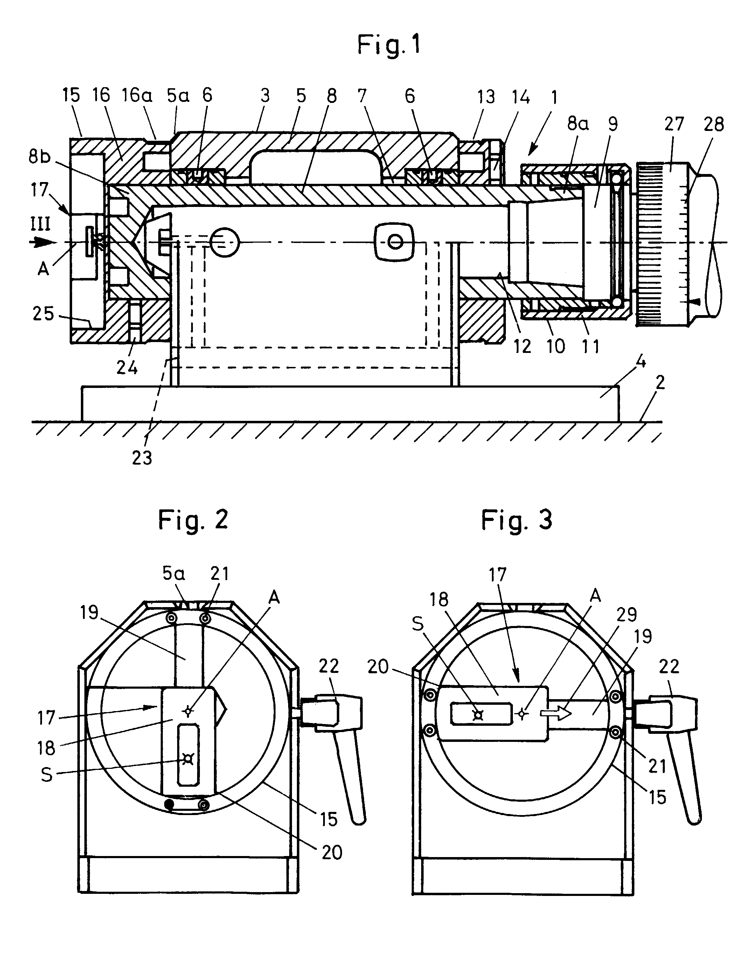

Die erfindungsgemässe Einrichtung 1 gemäss Figur 1 ist auf einen Tisch 2 gestellt und weist einen Stator 3 mit einer Grundplatte 4 und einem Gehäuse 5 auf. In einer Bohrung 7 des Gehäuses 5 ist mit zwei im Abstand zueinander angeordneten Luftlagern 6 ein Rotor 8 annähernd reibungsfrei gelagert. Zwecks Gewichtsreduktion ist der Rotor 8 vorzugsweise als Hohlkörper mit einer Bohrung 12 ausgeführt. An einem vorderen Ende 8a des Rotors 8 ist eine Spannvorrichtung 10 mit einem Spannring 11 angebracht, mit der ein Prüfling 9 am Rotor 8 lösbar befestigt ist. Der Prüfling 9 ist beispielsweise ein Ausdrehwerkzeug, das einen Unwucht-Ausgleichsring 27 mit einer Skala 28 aufweist. Hinter der Spannvorrichtung 10 ist auf dem Rotor 8 eine frei drehbare Skalascheibe 13 mittels einer Drehhemmung 14 fixiert.

Am anderen Ende 8b des Rotors 8 ist eine Messvorrichtung 15 angebracht, die einen Messring 16 aufweist, der axial am Rotor 8 fixiert ist und mit geringem Kraftaufwand auf diesem verdrehbar ist. In jeder Drehlage ist der Messring 16 mittels einer Drehhemmung 24 festgehalten. In einer rückseitigen Ausnehmung 25 des Messrings 16 ist eine Messeinheit 17 angebracht, die eine Steg 19 aufweist, der an seinen Enden mit Schrauben 21 am Messring 16 befestigt ist. Auf dem Steg 19 ist ein Schieber 18 zwischen zwei Endpositionen stufenlos verschiebbar. Die Figur 2 zeigt den Schieber 18 in der Nullposition, in welcher er an einem Anschlag 20 anliegt. In dieser Nullposition ist die Messeinheit 17 bezüglich der Achse A unwuchtneutral. Dies gilt auch für die übrigen am Rotor 8 angebrachten Teile, selbstverständlich mit Ausnahme eines nicht ausgewuchteten Prüflings 9.

Nachfolgend wird das Messverfahren kurz erläutert.

An einem Anschluss 23 wird den Lagern 6 Luft zugeführt, so dass der Rotor 8 mit dem Prüfling 9 annähernd reibungsfrei gelagert ist. Der Prüfling 9 wird mittels der Vorrichtung 10 am Rotor 8 befestigt. Hierbei ist der Rotor 8 mittels einer Klemmvorrichtung 22 im Gehäuse 5 festgeklemmt. Die Skalascheibe 13 wird mit Bezug auf eine Markierung am Prüfling 9 auf Null gestellt. Bei einem einschneidigen Ausdrehwerkzeug ist als Bezugspunkt z.B. vorzugsweise die Schneidenspitze zu wählen. Der Schieber 18 wird in die unwuchtneutrale Nullposition gebracht und die Klemmung an der Vorrichtung 22 wieder gelöst. Infolge der Schwerkraft dreht sich der Rotor 8 mit dem eingespannten Prüfling 9 bis, nach dem Auspendeln, der Schwerpunkt der Unwucht des Prüflings genau senkrecht unter der verlängerten Drehachse des Rotors liegt. Die Skala an der Scheibe 13 zeigt nun den Winkel des Unwuchtschwerpunktes bezüglich der Nullstellung und damit des Bezugspunktes am Prüfling an. Der Rotor 8 wird nun in dieser Lage wieder geklemmt und der Messring 16 auf dem Rotor so gedreht, dass die Markierungen 16a und 5a übereinstimmen. Der Steg 19 der Messeinheit 17 liegt nun genau senkrecht und deckt sich mit der Verbindungslinie des Unwuchtschwerpunktes S mit der Achse A des Rotors 8. Die Klemmung wird nun an der Vorrichtung 22 gelöst und der Rotor 8 mit der Messvorrichtung 15 um 90° im Uhrzeigersinn gedreht. Damit ist die in Figur 3 gezeigte Stellung erreicht. Infolge des hochgelegenen Schwerpunktes S entsteht ein Drehmoment im Gegenuhrzeigersinn um die Achse A. Dieses Drehmoment wird durch Verschieben des Schiebers 18 auf dem Steg 19 in Richtung des Pfeils 29 aufgehoben. Der Schieber 18 ist hierbei ein Gegengewicht und zeigt gleichzeitig den Verschiebeweg aus der Nullposition an. Die Messeinheit 17 kann auch mechanisch als Messtrommel ausgebildet sein. Vorzugsweise ist die Masse des Schiebers 18 so ausgelegt, dass der eingestellte Weg nach dem Auswuchten die Unwucht in g x mm angibt. Die somit gemessene Unwucht wird nach Bedarf am Prüfling 9 kompensiert, beispielsweise durch Anbringen von Ausgleichsgewichten, durch Materialabtrag oder durch Einstellen eines Unwucht-Ausgleichsringes 27.

Denkbar ist auch eine Ausführung, bei welcher das Drehmoment nicht mittels einer Schwerkraftwaage, wie im oben erläuterten Beispiel, gemessen wird, sondern aufgrund einer anderen bekannten Messmethode, beispielsweise mittels eines Piezokristalls, eines Messstreifens oder eines Drehmoment-Messgerätes.

## Patentansprüche

1. Verfahren zum Messen einer Unwucht an einem Prüfling (9), mit einer Einrichtung (1), die einen Stator (3) aufweist, in dem ein Rotor (8) um eine im wesentlichen horizontale Achse (A) freilaufend gelagert ist und dieser Rotor (8) eine Vorrichtung (10) zum lösbaren Befestigen des Prüflings (9) am Rotor (8) aufweist, wobei die Lage der Unwucht feststellbar ist, dadurch gekennzeichnet, dass nach dem Feststellen der Lage der Unwucht deren Schwerpunkt (S) durch Drehen des Rotors (8) angehoben und anschliessend die Grösse der Unwucht am Rotor (8) gemessen wird.

2. Verfahren nach Anspruch 1, dadurch gekennzeichnet, dass die Lage der Unwucht durch Auspendeln des Rotors (8) und des daran befestigten Prüflings (9) festgestellt wird.

3. Verfahren nach Anspruch 1 oder 2, dadurch gekennzeichnet, dass die Unwucht des Prüflings durch Verschieben eines Gewichts (18) aufgehoben wird.

4. Verfahren nach einem der Ansprüche 1 bis 3, dadurch gekennzeichnet, das die Unwucht durch Verschieben eines Messschiebers (18) einer Messvorrichtung (15) aufgehoben wird und der Verschiebeweg des Messschiebers (18) ein Mass für die Grösse der Unwucht ist.

5. Einrichtung zum Messen einer Unwucht an einem Prüfling (9), mit einem Stator (3), in dem ein Rotor (8) um eine im wesentlichen horizontale Achse (A) freilaufend gelagert ist und mit einer am Rotor (8) angebrachten Vorrichtung (10) zum lösbaren Befestigen des Prüflings (9) am Rotor (8), gekennzeichnet durch Mittel (15), mit denen am Rotor (8) eine Unwucht eines am Rotor (8) befestigten Prüflings (9) messbar ist, nachdem der Schwerpunkt (S) nach einem Auspendeln des Rotors (8) und des daran befestigten Prüflings (9) durch Drehen des Rotors (8) angehoben wurde.

6. Einrichtung nach Anspruch 5, dadurch gekennzeichnet, dass die genannten Mittel (15) eine Schwerkraftwaage oder Drehmoment-Messeinrichtung aufweisen, die am Rotor (8) oder am Stator (3) fixierbar ist und mit der am Rotor (8) eine Unwucht des Prüflings (9) messbar ist.

7. Einrichtung nach Anspruch 6, dadurch gekennzeichnet, dass die Schwerkraftwaage (18, 19) drehbar am Rotor (8) angebracht ist.

8. Einrichtung nach Anspruch 6 oder 7, dadurch gekennzeichnet, dass die Schwerkraftwaage (18, 19), beziehungsweise die Drehmoment-Messeinrichtung, in ihrer Nullstellung bezüglich des Rotors (8) unwuchtneutral ist.

9. Einrichtung nach Anspruch 7 oder 8, dadurch gekennzeichnet, dass die Schwerkraftwaage (18, 19) am ausgependelten Rotor (8) in einer Drehstellung fixierbar ist, in welcher das Waagegewicht in Richtung vom Schwerpunkt (S) der Unwucht zur Drehachse (A) des Rotors (8) hin verstellbar ist.

10. Einrichtung nach einem der Ansprüche 6 bis 9, dadurch gekennzeichnet, dass die genannten Mittel (15) einen Messring (16) aufweisen, der am Rotor (8) drehbar gelagert ist und der einen Messschieber (18) aufweist, der in Richtung vom Schwerpunkt (S) einer Unwucht zur Drehachse (A) des Rotors (8) hin verstellbar ist.

11. Einrichtung nach einem der Ansprüche 6 bis 10, dadurch gekennzeichnet, dass die genannten Mittel (15) einen Messschieber (18) aufweisen, der ein Masse aufweist, die so ausgelegt ist, dass nach einem Ausgleich der Unwucht der Verschiebeweg des Messschiebers mit einer vorbestimmten Zahl multipliziert die Grösse der Unwucht des Prüflings in einer bestimmten Einheit ergibt.

12. Einrichtung nach Anspruch 6, dadurch gekennzeichnet, dass die genannten Mittel (15) eine Drehmoment-Messvorrichtung aufweisen.

13. Einrichtung nach einem der Ansprüche 6 bis 12, dadurch gekennzeichnet, dass der Rotor (8) luftgelagert ist.

14. Einrichtung nach einem der Ansprüche 6 bis 13, dadurch gekennzeichnet, dass der Rotor (8) am Stator (3) festklemmbar ist.

15. Verfahren zum Auswuchten eines Prüflings mit einer Einrichtung nach Anspruch 6, gekennzeichnet durch folgende Schritte:
a) den Prüfling am Rotor befestigen,
b) den Rotor mit dem Prüfling auspendeln lassen,
c) die Lage des Unwucht-Schwerpunktes (S) feststellen,
d) den Rotor drehen um den Schwerpunkt anzuheben,
e) die Grösse der Unwucht messen,
f) die Unwucht am Prüfling aufgrund des Messresultates aufheben.

16. Verfahren nach Anspruch 15, dadurch gekennzeichnet, dass der Rotor (8) nach dem Auspendeln um etwa 90° um seine Längsachse gedreht wird.

17. Verfahren nach Anspruch 15 oder 16, dadurch gekennzeichnet, dass die genannten Mittel einen am Rotor (8) gelagerten Messring (16) aufweisen und dieser nach dem Auspendeln so gedreht wird, dass die Verschiebeachse einer am Messring (16) angeordneten Messeinheit in Richtung vom Schwerpunkt (S) der Unwucht zur Drehachse (A) zu liegen kommt.

18. Verfahren nach Anspruch 15 oder 16, dadurch gekennzeichnet, dass die genannten Mittel die Messung des durch die Unwucht hervorgerufenen Drehmoments am Rotor (8) ermöglichen.
